Europäisches Patentamt

European Patent Office

Office européen des brevets

(11) Publication number: **0 210 477**
**B1**

## (12) EUROPEAN PATENT SPECIFICATION

(45) Date of publication of patent specification: **04.10.89**　　(51) Int. Cl.⁴: **B 60 S 1/36**

(21) Application number: **86109254.2**

(22) Date of filing: **07.07.86**

(54) **Variable-sweep windscreen wiper for vehicles.**

(30) Priority: **26.07.85 IT 6769185**

(43) Date of publication of application:
**04.02.87 Bulletin 87/06**

(45) Publication of the grant of the patent:
**04.10.89 Bulletin 89/40**

(84) Designated Contracting States:
**DE FR GB SE**

(56) References cited:
**DE-A-2 417 128**
**DE-A-3 332 931**
**FR-A-1 561 395**
**GB-A-2 162 053**

(73) Proprietor: **FIAT AUTO S.p.A.**
**Corso Giovanni Agnelli 200**
**I-10135 Torino (IT)**

(72) Inventor: **Di Giusto, Nevio**
**Via Guarini, 48**
**I-10078 Venaria (IT)**

(74) Representative: **Prato, Roberto et al**
**c/o Ingg. Carlo e Mario Torta Via Viotti 9**
**I-10121 Torino (IT)**

Courier Press, Leamington Spa, England.

## Description

This invention relates to a variable-sweep windscreen wiper for a vehicle, of the type in which the wiper blade support arm is slidably carried by an arm support member, which is rotated by the windscreen wiper drive pin. This type of windscreen is particularly suitable for use as a single-blade windscreen wiper for wiping a larger vehicle windscreen surface.

In known windscreen wipers of the aforesaid type, the traversing movement of the wiper blade support arm on the arm support member is obtained from the rotary movement of the arm support member itself, by way of complicated transmissions of the lever mechanism type (connecting rod-crank). This type of transmission is subject to jamming, and is relatively bulky. From FR—A—1 561 395 a windscreen wiper is known in which part of the transmission is based on toothed mechanisms. However, also the wiper described in such a prior art reference needs a connecting rod assembly in order to move the slidably arm with respect to the support member, and therefore it is not free from the aforementioned drawbacks.

The object of the invention is to provide a vehicle windscreen wiper of the aforesaid type, which is of small overall size and reliable operation.

This object is attained according to the invention by a vehicle windscreen wiper comprising:

a pivoted arm support member operable to swing through an arc over a large area of the windscreen,

a wiper arm provided with a wiper blade holder at its distal end, supported to move with the arm support member through said arc and slidable endwise beyond the free distal end of the arm support member,

a rotatable drive pin provided with a concentric toothed pinion rigidly secured thereto,

transmission means meshing with said toothed pinion for transmitting the rotary motion of the rotatable drive pin to the arm support member,

and a control bar driven by the rotatable drive pin and hinged to the proximal end of the wiper arm (as known from FR—A—1 561 395), characterized in that said arm support member is mounted idly about said rotatable pin and is further characterized in that said control bar is provided with an internally toothed longitudinal track defining an endless path comprising a pair of parallel rectilinear branches joined together by respective curved end portions; said windscreen wiper further comprising guide means for causing said toothed pinion to engage with one of said branches and for guiding the trajectory of the consequent movement of said pinion relative to said bar along said endless path defined by said track.

The invention will be more apparent from the non-limiting description of one embodiment thereof given hereinafter with reference to the accompanying drawings, in which:

Figure 1 is an exploded perspective view of the windscreen wiper according to the invention;

Figure 2 is a partly sectional elevation of the windscreen wiper of Figure 1;

Figure 3 is an underside plan view of a detail of the windscreen wiper of Figure 1 at an enlarged scale; and

Figure 4 is a section on the line IV—IV of Figure 3.

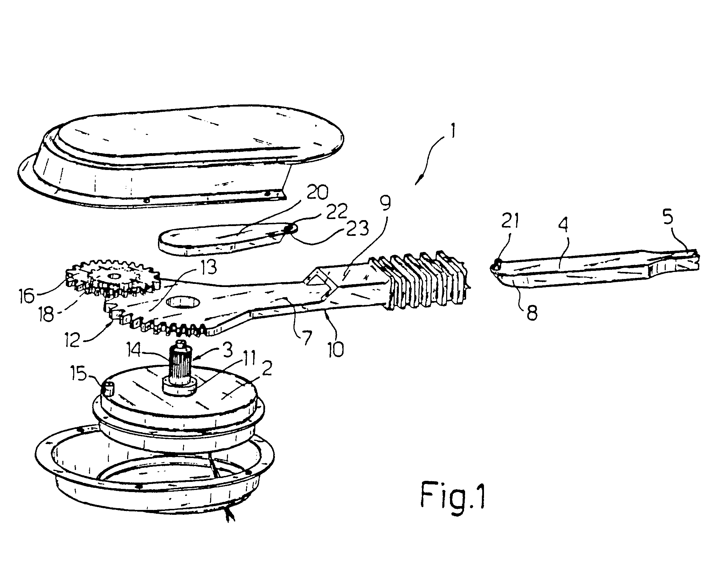

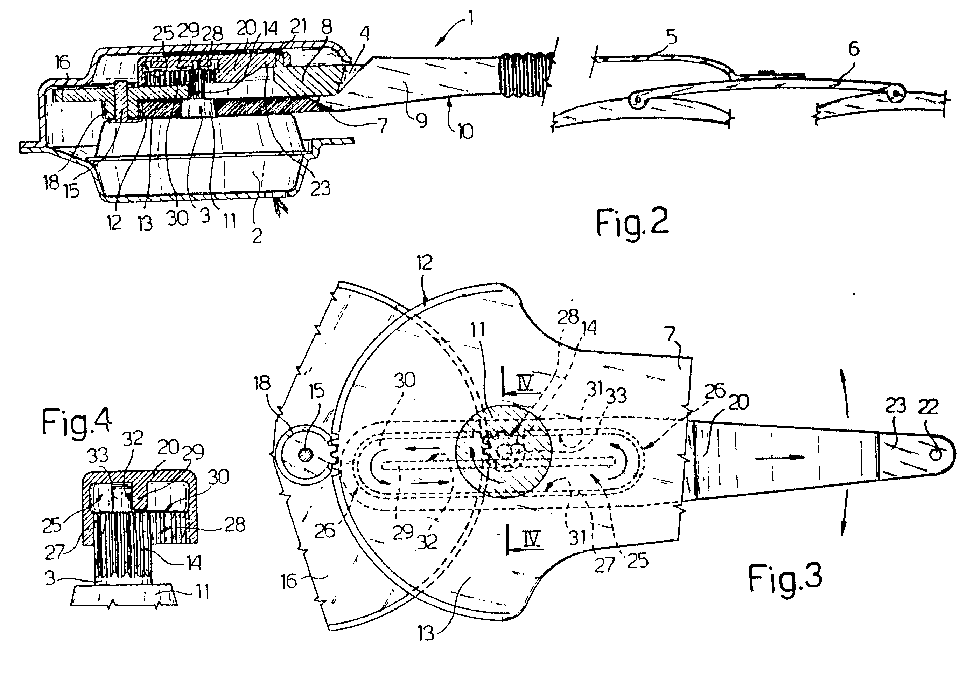

In Figures 1 and 2, the reference numeral 1 indicates overall a windscreen wiper for a vehicle of any known type, not shown for simplicity, and particularly suitable for wiping large zones of a respective vehicle window, also of known type and not shown for simplicity, for example the vehicle rear window or windscreen. The windscreen wiper 1 comprises a reversible electric motor 2 of known type and operating a rotatable drive pin 3, a wiper blade support arm 4 carrying rigidly at one of its ends 5 a wiper blade holder 6 of known type, and an arm support member 7 rotating about the axis of the pin 3 and carrying the arm 4 in a slidable but angularly rigid manner, that end 8 of this latter distant from the end 5 being slidably housed within a quadrangular guide sleeve 9 formed integrally with the arm support member 7 in correspondence with the projecting end 10 thereof.

The arm support member 7 is mounted idly on the motor 2 about a collar 11 coaxial to the pin 3, and is integral with a toothed sector 12 formed on its end 13 distant from the end 10. A pair of mutually coaxial and angularly rigid gears 16 and 18 are carried idly by the motor 2, eccentrically to the pin 3 on a pin 15 disposed near the pin 3, which is provided with an angularly rigid toothed pinion 14, and engage respectively with the toothed pinion 14 and the toothed sector 12, to thus ensure transmission of the rotary motion of the rotatable pin 3, produced by the motor 2, to the arm support member 7 which consequently, according to the direction of rotation of the pin 3, moves selectively along a circular curved trajectory in the directions shown by the arrows in Figure 3, to drag with it the arm 4 constrained within the sleeve 9, so that the arm 4 undergoes the well-known typical reciprocating sweeping movement of windscreen wipers, which enables the wiper blade, of known type, not shown for simplicity, and carried by the wiper blade holder 6 to wipe the said window, not shown.

According to the invention, the windscreen wiper 1 also comprises a control bar 20 hinged to the end 8 of the arm 4 by a pin 21 idly constrained in a rspective bore 22 in the reduced-thickness end 23 of the bar 20. The bar 20 is provided, towards the motor 2, with a lower slot-shaped longitudinal cavity 25 with rounded opposing ends 26, and bounded peripherally by a lower edge 27 provided with internal toothing 28, and provided internally with a central longitudinal rib 29 rounded at its ends and having a height preferably equal to the height of the untoothed root portion of the edge 27. The cavity 25 and rib 29 define an internally toothed annular track 30 defining an endless path, which comprises a pair of mutually parallel, longitudinal rectilinear branches 31 separated by the rib 29 and joined together by respective curved portions constituted by the ends 26. The toothing 28 is arranged to engage the pinion 14 in order to transmit the rotary motion of this latter, converted into reciprocating translational motion, to the bar 20 so that this latter becomes mobile longitudinally along its own axis, thus to cause the arm 4 to move relative to the arm support member 7. In this respect, suitable guide means maintain one of the toothed branches 31 in selective engagement with the pinion 14, and the curved portions 26, also provided with the toothing 28, ensure passage of the pinion 14 without discontinuity from one rectilinear branch 31 to the next. These guide means comprise an inner side wall 32 of the track 30 (Figure 4), this wall being defined by the rib 29, and a cylindrical endpiece of reduced diameter 33 provided on the rotatable pin 3 and projecting from the pinion 14 towards the base of the cavity 25 to cooperate laterally with the side wall 32. The rib 29 also cooperates with the front end of the pinion 14 by abutting against it, and the bar 20 is kept in engagement with the pinion 14 and with the other elements of the windscreen wiper 1 by a casing 40 composed of two half-casings 41, and housing the motor 2 and all the mobile members of the windscreen wiper 1, such as the gears 16 and 18, the bar 20 and part of the arm 4, and the end 13 of the member 7. Only the power supply cable for the preferably electric motor 2 and the end 10 of the member 7 emerge from the casing 40, so that the entire windscreen wiper 1 is supported by the casing 40 and can therefore be mounted with this latter on a vehicle by means of a single operation.

In order to ensure the operation of the described windscreen wiper 1, the motor 2 must be able to reverse the direction of rotation of the pin 3 which it operates, only when the pinion 14 is located in correspondence with that curved portion 26 defining the end of the track 30 facing the slidable arm 4, or facing the sleeve 9. On the assumption that this condition is satisfied, the operation of the windscreen wiper 1 is as follows (Figure 4): When the pinion 14 is rotated in the direction of the arrow, it engages with one of the branches 31, which act as racks, to cause the bar 20 to translate relative to the arm support member 7 in the direction of the arrow, and consequently it moves relative to the bar 20 with a relative movement the trajectory of which is indicated by the arrows and follows the shape of the endless path defined by the track 30. In this respect, when the bar 20 moves towards the sleeve 9, the pinion 14 approaches that curved portion 26 at the opposite end, and when it reaches it, it is guided by the endpiece 33, cooperating with the rib 29, so that it engages with the other branch 31, on the opposite side to the preceding. Consequently, as the pinion 14 continues to rotate in the same direction, but as the side of the toothing 28 with which it engages has changed, the movement of the bar 20 becomes reversed, and it moves towards the gears 15 and 18 to cause the pinion 14 to approach the curved portion 26 which defines the end of track 30 facing arm 4, in correspondence with which the bar 20 completes its to-and-fro movement, and the pinion 14 returns to the preceding branch 31. From this position, the pinion 14 is ready to again travel along the track 30 either in the same direction or in the opposite direction if the rotation of the pinion 14 is reversed, to in either case cause the bar 20 to undergo reciprocating translational movement in a manner analogous to that heretofore described, with maximum elongation in correspondence with that portion 26 facing the sleeve 9 and minimum elongation in correspondence with the opposite portion 26. It is therefore apparent that because of its connection both to the bar 20 and to the member 7, the arm 4 moves with a composite movement due to its rotation about the pin 3, rigid with the arm support member 7, and to its simultaneous translation, rigid with the bar 20, and relative to said arm support member 7. This movement therefore enables the wiper blade holder 6 to describe an arc of variable radius, which is a maximum at the upper corners of the window to be wiped, analogously to other known variable-sweep windscreen wipers. However, in contrast to known windscreen wipers, the windscreen wiper 1 enables the wiper blade holder 6 to undergo a symmetrical trajectory, to ensure equal cleaning of the two halves of the window, which is essential when used as a single-bladed windscreen wiper, i.e. as the only windscreen wiper cleaning the vehicle windscreen. Moreover, the translational movement is not subject to jamming, and the system of transmission members used is of small overall size, of low cost and of very simple production and assembly. Finally, the windscreen wiper 1 can be used on windows of different shapes by simply replacing the bar 20 by another of different length, and/or with a track 30 having a different number of teeth.

## Claims

1. A vehicle windscreen wiper comprising:
   a pivoted arm support member (7) operable to swing through an arc over a large area of the windscreen,
   a wiper arm (4) provided with a wiper blade holder (6) at its distal end, supported to move with the arm support member (7) through said arc and slidable endwise beyond the free distal end of the arm support member (7),
   a rotatable drive pin (3) provided with a concentric toothed pinion (14) rigidly secured thereto,
   transmission means (12, 14, 16) meshing with said toothed pinion (14) for transmitting the rotary motion of the rotatable drive pin (3) to the arm support member (7),
   and a control bar (20) driven by the rotatable drive pin (3) and hinged to the proximal end of the wiper arm (4), characterized in that said arm support member (7) is mounted idly about said rotatable pin (3) and is further characterized in that said control bar (20) is provided with an internally toothed longitudinal track (30) defining an endless path comprising a pair of parallel rectilinear branches joined together by respective curved end portions (26); said windscreen wiper further comprising guide means (29) for causing said toothed pinion (14) to engage with one of said branches and for guiding the trajectory of the consequent movement of said pinion (14) relative to said bar (20) along said endless path defined by said track (30).

2. A windscreen wiper (1) as claimed in Claim 1, characterized by further comprising a reversible operating motor (2) which rotates said rotatable drive pin (3) and is arranged to reverse its direction of rotation only when said pinion (14) is located in correspondence with that of said curved portions which defines the end of said track (30) facing said arm (4) and when the wiper reaches the right or left edge of the arc of the wiper area.

3. A windscreen wiper (1) as claimed in Claim 1 or 2, characterized in that said arm support member (7) and said transmission means (12, 14, 16) are both idly carried by a support (2) surrounding said rotatable pin (3), said arm support member (7) being disposed coaxial to said rotatable pin (3), and said transmission means comprising a toothed sector (12) formed on the proximal end (13) of said arm support member (7), and a pair of mutually coaxial gears (16, 18) mounted eccentric to said rotatable pin (3), a first of said gears (16) engaging said toothed pinion (14), and the other gear (18) engaging said toothed sector (12) of the arm support member (7).

4. A windscreen wiper (1) as claimed in Claims 2 and 3, characterised in that said support is constituted by said reversible motor (2).

5. A windscreen wiper (1) as claimed in any one of the preceding claims, characterised in that said guide means comprise an inner side wall of said track (30) defined by a lower rib (29) provided on said control bar (20) and cooperating frontally with said pinion (14) by abutting thereagainst, and laterally with a cylindrical reduced-diameter endpiece of said rotatable pin (3), said rib (29) dividing said two rectilinear branches of said track (30) from each other, this latter being defined by said rib (29) and by a lower cavity (25) of said control bar (20), bounded by an internally toothed edge (27) and containing said rib (29).

## Patentansprüche

1. Scheibenwischer für Fahrzeuge, bestehend aus:

drehbare Stützvorrichtung für Arm (7), die dazu dient, in einem Bogen über einen großen Bereich der Windschutzscheibe zu schwingen,

Scheibenwischerarm (4), versehen mit einem Wischblatthalter (6) an seinem distalen Ende, in der Lage, zusammen mit der Stützvorrichtung für den Arm (7) in besagtem Bogen zu gleiten und senkrecht entlang dem freien distalen Ende der Stützvorrichtung für den Arm (7) zu gleiten,

drehbarer Bolzen (3) versehen mit einer rundlaufenden Ritzel (14) zusätzlich fest gesichert,

Übersetzungsvorrichtung (12, 14, 16), die mit besagter Ritzel zusammengreifen (14), um die Drehbewegung des drehbaren Bolzens (3) auf die Stützvorrichtung für den Arm (7) zu übertragen,

und Kontrollschiene (20), durch den drehbaren Bolzen (3) geführt und am nächstliegenden Ende des Scheibenwischerarms (4) aufgehängt, dadurch gekennzeichnet, daß besagte Stützvorrichtung für den Arm (7) lose auf den drehbaren Bolzen (3) montiert ist und weiterhin dadurch gekennzeichnet, daß besagte Kontrollschiene (20) mit einem länglichen, vollständig gezahnten Teil (30) versehen ist, das einen endlosen Umlauf darstellt, ausgestattet mit einem Paar paralleler, gerader Arme, die durch entsprechende Teile mit gebogenen Enden (26) verbunden werden; besagter Scheibenwischer besteht weiterhin aus Führungsvorrichtungen (29), damit die besagte Ritzel (14) in einen der besagten Arme gehängt werden kann und um die nachfolgende Bewegung der besagten Ritzel (14) im Verhältnis zu besagter Schiene (20), entlang besagtem endlosen Umlauf, der durch besagtes gezahntes Teil (30) vorgegeben wird, zu führen.

2. Scheibenwischer (1) nach Anspruch 1, dadurch gekennzeichnet, daß er weiterhin aus einem, auch in Gegenrichtung drehenden Motor (2) besteht, der besagten drehbaren Bolzen (3) in Drehbewegung versetzt und so gebaut ist, daß er seine Drehrichtung nur dann ändert, wenn besagte Ritzel (14) in einem Verhältnis mit den besagten gebogenen Teilen steht, die das Ende des gazahnten Teiles (30) darstellen, gegenüber besagtem Arm (4) und wenn der Wischer den rechten oder linken Rand des Bogens des Wischbereichs erreicht.

3. Scheibenwischer (1) nach Anspruch 1 oder 2, dadurch gekennzeichnet, daß besagte Stützvorrichtungen für den Arm (7) und besagte Übersetzungvorrichtungen (12, 14, 16) beide lose von einer Verstärkung (2) getragen werden, die sich um den besagten drehbaren Bolzen (3) befindet, besagte Stützvorrichtung für den Arm (7) steht koaxial zu besagtem drehbarem Bolzen (3) und besagte Übersetzungsvorrichtungen bestehen und einem gezahnten Bereich (12), der sich auf dem nächstliegenden Ende (13) der besagten Stützvorrichtung für den Arm (7) befindet und einem Paar reziproken koaxialen Zahnrädern (16, 17), die in exzentrischer Position auf den drehbaren Bolzen montiert sind (3), das erste der besagten Zahnräder (16) hängt an der besagten Ritzel (14), das andere Zahnrad (18) hängt an dem gezahnten Bereich (12) der Stützvorrichtung für den Arm (7).

4. Scheibenwischer (1) nach Anspruch 2 und 3, dadurch gekennzeichnet, daß besagte Verstärkung aus besagtem, in Gegenrichtung drehenden Motor (2) besteht.

5. Scheibenwischer (1) nach einem der vorangegangenen Ansprüche, dadurch gekennzeichnet, daß die besagten Führungsvorrichtungen aus einer inneren Seite des besagten gezahnten Teiles (30) bestehen, die aus einer niedrigen Erhebung (29) besteht, auf besagter Kontrollschiene montiert (20) und die frontal mit besagter Ritzel (14) zusammenarbeitet, indem sie gegen sie ansteößt und seitlich mit einem zylindrischen Endstück mit reduziertem Durchmesser, das Teil von besagtem drehbaren Bolzen (3) ist, besagte Erhebung (29) teilt die beiden geraden Arme des besagten gezahnten Teiles (30) voneinander, dieses letztere besteht aus besagter Erhebung (29) und einer kleinen Vertiefung (25) besagter Kontrollischiene (20), begrenzt durch einen internen gezahnten Rand (27), der besagte Erhebung enthält.

## Revendications

1. Essuie-glace de pare-brise de véhicule comprenant:

un organe de support (7) de bras pivoté pouvant être actionné de manière à effectuer un arc sur une grande surface du pare-brise,

un bras d'essuyage (4) muni d'un dispositif de maintien (6) d'une pale d'essuyage à son extrémité distale et supporté pour se déplacer, avec l'organe support de bras (7), dudit arc et coulissable longitudinalement au-delà de l'extrémité distale libre de l'organe support de bras (7),

un ergot d'entraînement rotatif (3) muni d'un pignon denté concentrique (14) solidarisé de manière fixe à cet ergot,

des moyens de transmission (12, 14, 16) engrenant ledit pignon denté (14) pour transmettre le mouvement de rotation de l'ergot d'entraînement rotatif (3) à l'organe support de bras (7),

et une barre de commande (20) entraînée par l'ergot d'entraînement rotatif (3) et montée pivotante sur l'extrémité proche de l'arbre d'essuyage (4), caractérisé en ce que ledit organe support de bras (7) est monté fou autour dudit ergot rotatif (3) et en ce que la barre de commande (20) est munie d'une courroie longitudinale (30) intérieurement crantée et définissant un chemin sans fin comprenant une paire de branches rectilignes parallèles jointes ensemble par des régions d'extrémité (26) incurvées respectives, ledit essuie-glace de pare-brise comprenant en outre des moyens de guidage (29) conçus de manière que le pignon denté (14) vienne en prise avec l'une desdites branches et de manière à guider la trajectoire du mouvement consécutif du pignon (14) relativement à la barre (20) le long dudit chemin sans fin défini par la courroie (30).

2. Essuie-glace de pare-brise (1) conforme à la revendication 1, caractérisé en ce qu'il comprend un moteur d'actionnement réversible (2) qui entraîne en rotation ledit ergot d'entraînement rotatif (3) et est conçu pour inverser sa direction de rotation seulement quand le pignon (14) est situé en correspondance avec la région incurvée qui définit l'extrémité de la courroie (30) en vis-à-vis avec le bras (4), et quand l'essuie-glace atteint le bord droit ou gauche de l'arc de la zone d'essuyage.

3. Essuie-glace de pare-brise (1) conforme à l'une des revendications 1 ou 2, caractérisé en ce que l'organe support de bras (7) et les moyens de transmission (12, 14, 16) sont tous portés à rotation libre par un support (2) entourant l'ergot rotatif (3), l'organe support de bras (7) étant disposé coaxialement audit ergot rotatif (3) et les moyens de transmission comprenant un secteur denté (12) formé sur l'extrémité proche (13) de l'organe support de bras (7) et une paire d'engrenages mutuellement coaxiaux (16, 18) montés de manière excentrique par rapport à l'ergot rotatif (3), un premier desdits engrenages (16) engrenant le pignon denté (14), et le second engrenage (18) engrenant le secteur denté (12) de l'organe support de bras (7).

4. Essuie-glace de pare-brise (1) conforme à l'une des revendications 2 ou 3, caractérisé en ce que ledit support est constitué par ledit moteur réversible (2).

5. Essuie-glace de pare-brise (1) conforme à l'une des revendications précédentes, caractérisé en ce que les moyens de guidage comprennent une paroi latérale interne de la bande (30) définie par une nervure inférieure (29) prévue sur la barre de commande (20) et coopérant frontalement avec le pignon (14) en venant en appui contre celui-ci, et latéralement avec une pièce d'extrémité cylindrique de diamètre réduit dudit ergot rotatif (3), ladite nervure (29) divisant les deux branches rectilignes de la courroie (30) l'une par rapport à l'autre, cette dernière étant définie par la nervure (29) et par une cavité inférieure (25) de la barre de commande (20), limitée par un bord denté interne (27) et contenant ladite nervure (29).

EP 0 210 477 B1

Fig.1

1

Fig.2

Fig.3

Fig.4